# FASCICULE DE BREVET EUROPEEN

(11) **EP 2 895 319 B1**
(45) Date de publication et mention de la délivrance du brevet: **13.06.2018**
(21) Numéro de dépôt: 13759793.6
(22) Date de dépôt: 12.09.2013
(51) Int. Cl.: B29C 70/44, B29C 35/02

(54) **DISPOSITIF D'INFUSION D'UNE PIECE COMPOSITE ET PROCEDE ASSOCIE**
VORRICHTUNG ZUR INFUSION EINES VERBUNDTEILS UND ZUGEHÖRIGES VERFAHREN
DEVICE FOR INFUSING A COMPOSITE PART AND ASSOCIATED METHOD

(30) Priorité: 17.09.2012 FR 1258703
(43) Date de publication de la demande: 22.07.2015
(73) Titulaire: AIRBUS (SAS), 31700 Blagnac (FR)
(72) Inventeur: AUFRAY, Stéphane, F-44410 Saint Lyphard (FR)
(74) Mandataire: Gicquel, Olivier Yves Gérard
(86) Numéro de dépôt international: PCT/EP2013/068942
(87) Numéro de publication internationale: WO 2014/041090

(56) Documents cités:
- EP-A2- 2 105 285
- DE-A1- 10 146 323
- DE-A1-102010 037 849
- FR-A1- 2 821 012
- US-A- 4 559 810
- US-A- 4 758 803
- US-A1- 2002 020 934
- US-A1- 2008 315 462
- US-H- H 465
- STOVEN T ET AL: "Continuous monitoring of three-dimensional resin flow through a fibre preform", COMPOSITES PART A: APPLIED SCIENCE AND MANUFACTURING, ELSEVIER SCIENCE PUBLISHERS B.V., AMSTERDAM, NL, vol. 34, no. 6, 1 juin 2003 (2003-06-01), pages 475-480, XP004428273, ISSN: 1359-835X, DOI: 10.1016/S1359-835X(03)00059-9
- Dirk Heider ET AL: "Cure Monitoring and Control" In: "Composites", 1 décembre 2001 (2001-12-01), ASM International, USA, XP055064499, ISBN: 978-0-87-170703-1 pages 692-698, page 696

## Description

### DOMAINE TECHNIQUE DE L'INVENTION

L'invention concerne un dispositif d'infusion d'une pièce composite ainsi que le procédé associé.

Cette invention relève du domaine des procédés d'infusion de résine pour la fabrication d'une pièce composite à partir d'une préforme fibreuse sèche. Plus particulièrement, le dispositif et le procédé objets de l'invention relèvent du contrôle non destructif et de la maîtrise du procédé dit LRI, acronyme de « *Liquid Resin Infusion* » en anglais.

### ETAT DE LA TECHNIQUE

La fabrication d'une pièce composite selon le procédé LRI comprend deux étapes principales : la réalisation d'une préforme fibreuse sèche puis l'injection d'une résine dans la préforme fibreuse. Ce procédé de fabrication permet la réalisation d'une structure de forme complexe, réduisant au maximum l'étape d'assemblage et évitant l'introduction de jonctions (boulonnées ou collés) fragilisant la pièce.

Le procédé d'infusion de résine liquide, tel que décrit dans le document FR 2 948 600, est un procédé de fabrication d'une pièce composite utilisant un transfert de résine à basse pression sous vide dans une préforme fibreuse sèche. La préforme, constituée d'une stratification de plis fibreux est disposée dans la cavité étanche d'un moule prise entre un tissu drainant et une tôle de conformation ou « caul plate » perforée. La cavité étant tirée au vide, de la résine liquide est transférée dans l'épaisseur de la préforme selon une direction sensiblement normale à la stratification. Le tissu drainant, placé du côté où la résine est injectée, permet de répartir le front de propagation de la résine liquide sur toute la surface de la préforme. La tôle de conformation réalise la calibration de l'épaisseur de la pièce. Ainsi la résine liquide se propage dans l'épaisseur de la préforme fibreuse jusqu'à la tôle de conformation. Selon l'art antérieur cette tôle de conformation est pourvue de moyen de chauffage qui en chauffant la préforme permettent de conserver la fluidité de la résine.

La fin d'injection est détectée par le débordement de la résine à travers les perforations de la tôle de conformation. Cependant cet effet visuel ne permet pas de garantir l'absence de zones sèches dans la pièce ainsi obtenue. Cet examen visuel est associé à un contrôle du volume de résine injectée et à l'équilibre des pressions internes. Ces deux paramètres sont difficilement maitrisables car le calcul du volume à injecter ne prend pas en compte le volume perdu dans les canaux d'alimentation ni la résine en excès perdue après le dernier tissu à délaminer diffusé par la tôle de conformation. De plus, le calcul de l'équilibre des pressions internes ne prend pas en compte l'éventuelle mobilité de l'environnement. Ce dernier paramètre modifie le taux volumique de résine donc l'épaisseur de la structure injectée. Ceci induit un non-respect du taux volumique de fibres visé garant d'un comportement mécanique objectif.

Aussi, pour contrôler la qualité d'une pièce composite issue de ce procédé de fabrication, la méthode utilisée selon l'art antérieur consiste en un contrôle destructif par prélèvement afin d'analyser la structure interne ou les propriétés de résistance de la pièce ainsi prélevée. Cette méthode d'analyse de la santé-matière des pièces produites ne permet pas d'assurer une fiabilité certaine des pièces et n'est pas adaptable à des productions en petite série. De plus, cette méthode induit des coûts d'exploitation supplémentaires au procédé de fabrication.

Le document EP2105285 illustre le procédé d'infusion de résine dans une préforme fibreuse au moyen d'un dispositif comprenant un moule comportant une cavité étanche apte à recevoir la préforme fibreuse et comportant une arrivée de résine liquide, ainsi qu'une tôle de conformation disposée dans la cavité, en contact avec la préforme fibreuse. Ce document présente également l'introduction de moyens de mesure dans la tôle de conformation.

### OBJET DE L'INVENTION

L'invention a pour but de remédier à ces inconvénients.

A cet effet, selon un premier aspect, l'invention concerne un dispositif pour l'infusion de résine dans une préforme tel que décrit dans la revendication 1.

L'invention permet de réaliser une analyse de la santé-matière de la pièce composite au cours du transfert de résine dans la préforme. L'analyse de la santé-matière est réalisable sans destruction de la pièce. L'invention améliore ainsi la qualité des pièces composites réalisées et en simplifie le contrôle.

Avantageusement, le moyen de mesure comporte un capteur émetteur récepteur et la tôle de conformation comporte un évidement apte à positionner ledit capteur. Un capteur émetteur récepteur est particulièrement adapté aux pièces composites de faible épaisseur. De plus, l'installation d'un tel capteur dans le dispositif d'infusion est assez simple puisqu'elle requiert un seul perçage de la tôle de conformation.

Avantageusement, le moyen de mesure comporte un émetteur positionné dans un évidement du moule et un récepteur positionné dans un évidement de la tôle de conformation. Le positionnement de l'émetteur et du récepteur de part et d'autre de la préforme fibreuse permet de limiter le trajet parcouru par le signal ultrason. Ce mode de réalisation est particulièrement adapté aux pièces composites de forte épaisseur. De plus, la séparation de l'émetteur et du récepteur permet de modifier l'émetteur en fonction de l'épaisseur de la pièce composite sans changer les deux parties du moyen de mesure.

Avantageusement, le dispositif comprend un réseau de moyens de mesure, lesdits récepteurs desdits moyens de mesure du réseau étant répartis sur des lignes et des colonnes régulièrement espacées. Ce mode de réalisation permet de réaliser une analyse santé-matière simultanément sur plusieurs parties d'une pièce composite.

La tôle de conformation est chauffante et la partie du moyen de mesure placée sur ladite tôle de conformation comporte une pastille piézoélectrique montée sur un substrat dont la matière est apte à supporter la température de chauffage de la tôle de conformation. Ce mode de réalisation permet d'adapter le moyen de mesure en fonction de l'application. Par exemple, un substrat en graphite est particulièrement adapté pour supporter des injections thermoplastiques à 390°C tandis qu'un substrat en polyétheréthercéton est particulièrement adapté pour supporter des injections de résine époxyde à 180°C.

Selon un deuxième aspect, l'invention concerne un procédé d'infusion de résine dans une préforme fibreuse utilisant un dispositif selon l'invention, le procédé comportant les étapes consistant à saturer progressivement la préforme fibreuse par la résine liquide, émettre et recevoir un signal ultrasonore à travers la préforme fibreuse, mesurer un temps de propagation du signal ultrasonore pour parcourir un aller-retour dans la section de la préforme fibreuse, et déterminer la réticulation de la pièce composite en fonction des variations du temps de propagation.

Le temps de propagation représente une vitesse de propagation du signal ultrason dans la pièce composite variant au cours de l'injection et de l'infusion de la résine liquide. Ce procédé permet donc de rendre compte des variations de densité de matière de la pièce composite car plus la pièce composite est dense, plus le temps de propagation est élevé. Par exemple, pour une pièce composite réalisée en carbone Epoxy, la vitesse de propagation du signal ultrason est de 2mm/s avant infusion et de 3mm/s après infusion et polymérisation. L'estimation de la réticulation permet de connaitre la résistance mécanique de ladite pièce composite.

Avantageusement, le procédé comporte les étapes consistant à mesurer l'amplitude relative du signal ultrasonore correspondant au rapport entre l'amplitude du signal ultrason envoyé et l'amplitude du signal ultrason reçu, et déterminer la réticulation de la pièce composite en fonction de l'amplitude relative. L'amplitude relative du signal ultrason permet de rendre compte de la densité de matière de la pièce composite car plus la pièce est dense, plus l'atténuation du signal ultrason est faible. Ce mode de réalisation permet ainsi une analyse complémentaire avec le temps de propagation.

Avantageusement, le procédé comporte les étapes consistant à estimer un taux de saturation de la préforme fibreuse en fonction du temps de propagation et/ou de l'amplitude relative du signal reçu, et stopper la saturation de la préforme fibreuse lorsque la préforme fibreuse à atteint un seuil de saturation maximale.

Cette réalisation permet de contrôler le processus d'imprégnation en résine liquide de la préforme fibreuse. Elle permet de palier aux déplacements éventuels de l'environnement qui apparaissent, par exemple, lors d'une perte de fluide dans le moyen d'injection. Elle permet ainsi d'éviter d'injecter trop ou trop peu de résine liquide dans la préforme comme cela peut arriver par les méthodes d'estimation du remplissage de la préforme de l'état de la technique.

Avantageusement, le procédé comporte l'étape de détecter un séparateur de la préforme fibreuse en fonction du temps de propagation ou de l'amplitude relative du signal reçu. Cette réalisation permet de contrôler le processus de fabrication des pièces composites de structure drapée, et de détecter, par exemple, la présence de corps étrangers de type séparateur en polyéthylène. Le moyen de mesure permet ainsi de remplir ce rôle de détection.

### BREVE DESCRIPTION DES FIGURES

L'invention est exposé ci-après selon ses modes de réalisation préférés, nullement limitatif en référence aux figures 1 à 7 dans lesquelles :
La Figure 1 représente une vue en coupe d'un dispositif d'infusion selon un premier mode de réalisation de l'invention ;
La Figure 2 représente une vue de dessous d'une tôle de conformation du dispositif de la Figure 1 ;
La Figure 3 représente une vue de dessus de la tôle de conformation du dispositif de la Figure 1 ;
La Figure 4 représente un schéma du principe d'acquisition d'une mesure ultrason selon un deuxième mode de réalisation de l'invention ;
La Figure 5 représente une mesure temporelle de la saturation et de l'infusion d'une préforme fibreuse ;
La Figure 6 représente une mesure temporelle de l'infusion d'une préforme fibreuse et l'amplitude de signal associée.
La Figure 7 représente une vue de dessous de la tôle de conformation d'un dispositif d'infusion à captations multiples selon un troisième mode de réalisation.

### DESCRIPTION D'UN MODE DE REALISATION PREFERENTIEL DE L'INVENTION

Dans la description les éléments identiques, similaires ou analogues conservent la même référence d'une figure à l'autre.

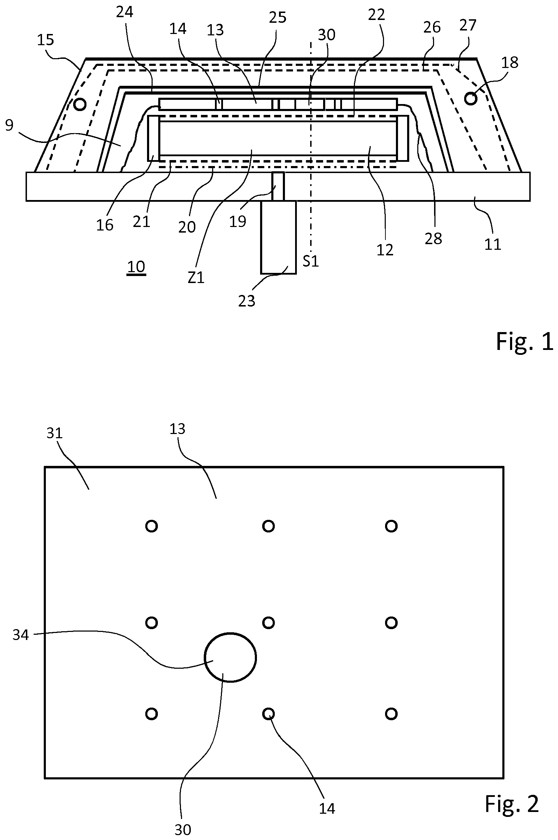

Les Figures 1 à 3 montrent un dispositif 10 d'infusion d'une pièce composite selon un premier mode de réalisation de l'invention. Le dispositif 10 permet d'infuser une résine liquide dans une préforme 12 fibreuse comprenant la matrice de la pièce composite à réaliser.

La préforme 12 est positionnée sur un moule 11 et recouverte d'une vessie étanche 15 formant une cavité 9. Plus précisément, la préforme 12 est positionnée en contact longitudinal avec le moule 11. La préforme 12 est entourée d'un premier tissu à délaminer 21 disposé en dessous et d'un deuxième tissu à délaminer 22 disposé au dessus reliés sur les cotés de la préforme 12 par un moyen de fixation 16. Les tissus à délaminer 21, 22 sont préférentiellement réalisés en tissu de verre téflonné pour faciliter le démoulage de la pièce composite. Un environnement drainant 20 est disposé entre le premier tissu à délaminer 21 et le moule 11 de sorte à répartir sur la préforme 12 la résine liquide injectée depuis un moyen d'injection 23 à travers une arrivée de résine 19 du moule 11.

La calibration en épaisseur de la préforme 12 est assurée par une tôle de conformation 13 disposée au dessus de la préforme 12. Lorsque la préforme 12 est plane, la tôle de conformation 13 peut également régler la planéité de la préforme 12. La tôle de conformation 12 comporte des perforations 14 destinées à évacuer le surplus de résine. Lorsque la tôle de conformation 13 est chauffante, ladite tôle de conformation 13 est reliée à un système de contrôle par un ensemble de connecteurs 28.

La tôle de conformation 13 comporte un moyen 30 de mesure apte à émettre et recevoir un signal ultrason à travers une section S1 de la pièce composite. Le moyen 30 de mesure comporte une pastille 36 piézoélectrique muni d'une tête 34 plane dont la surface est positionnée dans le même plan que la surface du dessous 31 de la tôle de conformation 13. La pastille 36 est montée sur un substrat 35 circulaire positionné sur la surface du dessus 32 de la tôle de conformation 13. Le substrat 35 est préférentiellement adapté à la température d'utilisation de la tôle de conformation 13. Un joint d'étanchéité 37 est positionné autour de la pastille 36 pour éviter les pertes de résine. Les signaux d'alimentation et de données sont reliés au moyen 30 de mesure au niveau du dessus 32 de la tôle de conformation 13 par deux connectiques 38, 39.

Tous les éléments depuis la tôle de conformation 13 jusqu'au moule 11 sont protégés par deux membranes 24, 25 ainsi que deux tissus drainant 26, 27 entre lesquels la cavité 9 comporte un moyen de tirage du vide 18.

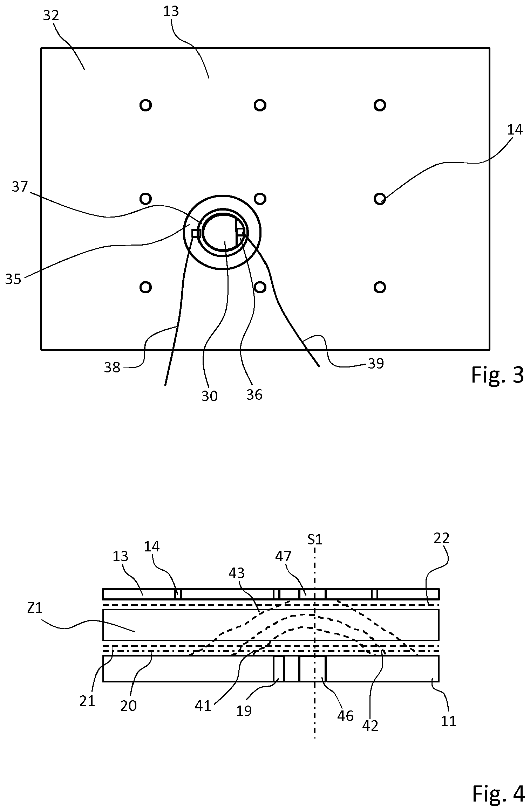

La Figure 4 montre un second mode de réalisation de l'invention pour lequel le moyen 30 de mesure est décomposé en un module d'émission 46 disposé dans le moule 11 et un module de réception 47 disposé dans la tôle de conformation 13. Le signal ultrason effectue un seul passage dans la section S1 de la préforme 12 au lieu d'effectuer un aller-retour (cas du premier mode de réalisation).

Au niveau de la section S1, un premier front de résine 41 représente un instant de début d'infusion de la préforme 12. Un deuxième front de résine 42 représente un instant de saturation partielle de la préforme 12 et un troisième front de résine représente un instant de saturation complète de la préforme 12.

Le procédé d'injection consiste à chauffer la résine et la préforme 12 puis à réaliser une injection de la résine dans la préforme 12. La résine circule rapidement en premier lieu dans l'environnement drainant 20 puis elle se diffuse au travers du tissu à délaminer 21 avant d'infiltrer la préforme 12 jusqu'à la tôle de conformation 13. Les perforations 14 de celle-ci éliminent la résine en excès.

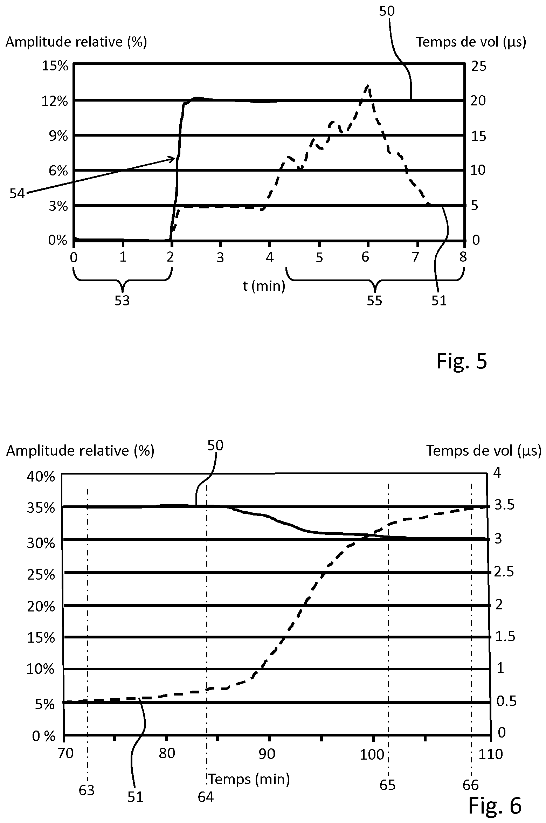

Au cours du procédé d'injection et d'infusion, le moyen 30 de mesure permet d'obtenir une mesure du temps de propagation 50 du signal ultrasonore, c'est-à-dire le temps nécessaire audit signal pour traverser une section S1 de la préforme. Le moyen 30 de mesure permet d'estimer une amplitude relative 51 entre l'amplitude du signal ultrason envoyé et l'amplitude du signal ultrason reçu. Les Figures 5 et 6 montrent les relevés du temps de propagation 50 et de l'amplitude relative 51 en fonction du temps. Lors d'une première période 53 allant de 0 à 2 minutes le capteur 47 n'est pas encore en contact avec la résine liquide. Après 2 minutes, le capteur 47 est en contact avec la résine liquide et la préforme est rapidement saturée de résine. Ce phénomène d'imprégnation 54 est visible par une forte augmentation du temps de propagation 50 entre 0 et 20µs et une augmentation de l'amplitude relative 51 entre 0 et 3%. L'apparition de ce phénomène d'imprégnation 54 permet de stopper la saturation de la préforme 12 et de contrôler la qualité du processus d'injection. En variante, ce phénomène d'imprégnation 54 permet également de détecter un séparateur de la préforme 12.

Lorsque la préforme 12 est saturée de résine, la résine commence à se durcir sous l'effet de la température et à se réticuler pour former la structure de la pièce composite finale. Lors de la phase intermédiaire 55 du début de l'infusion, le temps de propagation 50 est sensiblement constant et l'amplitude relative 51 varie fortement en fonction de la structure de la préforme 12 fibreuse. La Figure 6 montre l'évolution du phénomène de réticulation pendant le cycle de polymérisation, soit entre 70 et 110 minutes. Cette Figure montre que le temps de propagation 50 diminue au cours de l'infusion tandis que l'amplitude relative 51 augmente.

A l'instant 63, sensiblement égal à 72 min, le dispositif monte en température afin d'activer la réaction. Le temps de propagation 50 est sensiblement constant à 3.5µs et l'amplitude relative 51 est sensiblement constante à 5%.

A l'instant 64, sensiblement égal à 84 min, le dispositif atteint le point de gel marquant le début de la réticulation. Entre les instants 63 et 64, l'amplitude relative 51 subit une faible augmentation et le temps de propagation 50 diminue faiblement.

A l'instant 65, sensiblement égal à 101 min, le dispositif atteint le point de solidification. Entre les instants 64 et 65, l'amplitude relative 51 subit une forte augmentation couplée avec une forte diminution du temps de propagation 50.

A l'instant 66, le dispositif est dans une phase de finition de la solidification. Entre les instants 66 et 65, l'amplitude relative 51 subit une faible augmentation pour tendre vers 35% et le temps de propagation 50 diminue faiblement pour tendre vers 3 µs.

Lors du cycle de polymérisation, les variations de l'amplitude relative 51 ou du temps de propagation 50 permettent de réaliser une étude santé-matière de la pièce composite. En effet, si la préforme 12 comporte un corps étranger (séparateur, papier transfert...) lors de la polymérisation, le signal ultrason bute contre ce corps étranger lors de la transmission du signal ultrason et impacte l'amplitude relative 51 et/ou le temps de propagation 50 en fonction de la nature et de la position du corps étranger. En pratique, l'amplitude relative 51 d'une pièce composite comportant un corps étranger sera plus faible que l'amplitude relative 51 attendue pour cette même pièce.

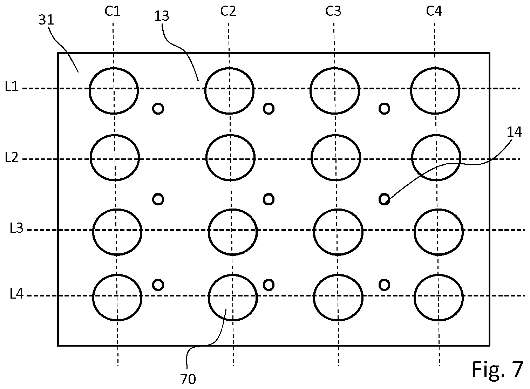

La Figure 7 montre un troisième mode de réalisation pour lequel la tôle de conformation 13 comporte un réseau 70 de moyens 30 de mesure régulièrement répartis sur quatre lignes L1-L4 et sur quatre colonnes C1-C4. Ce mode de réalisation permet au dispositif d'infusion de fournir une analyse santé-matière à plusieurs endroits différents de la pièce composite.

## Revendications

1. Dispositif (10) pour l'infusion de résine dans une préforme (12) fibreuse, ledit dispositif (10) comprenant :
- un moule comportant une cavité (9) étanche apte à recevoir la préforme (12) fibreuse et comportant une arrivé (19) de résine liquide, et
- une tôle de conformation (13) disposée dans la cavité (9), en contact avec la préforme (12) fibreuse,
**caractérisé en ce que** ledit dispositif (10) comprend un moyen (30) de mesure comportant un émetteur et un récepteur aptes à émettre et recevoir un signal ultrasonore à travers une section (S1) de ladite préforme (12) fibreuse, la réception dudit signal étant réalisée à travers la tôle de conformation (13), le récepteur du moyen (30) de mesure étant positionné dans un évidement de la tôle de conformation (13), et **en ce que** la tôle de conformation (13) est chauffante et le récepteur du moyen (30) de mesure comporte une pastille (36) piézoélectrique montée sur un substrat (35) dont la matière est apte à supporter la température de chauffage de la tôle de conformation (13).

2. Dispositif selon la revendication 1, **caractérisé en ce que** le moyen (30) de mesure comporte un capteur émetteur récepteur positionné dans l'évidement de la tôle de conformation (13).

3. Dispositif selon la revendication 1, **caractérisé en ce que** le moyen (30) de mesure comporte un émetteur (46) positionné dans un évidement du moule (11).

4. Dispositif selon l'une des revendications 1 à 3, **caractérisé en ce que** ledit dispositif (10) comprend un réseau de moyens (30) de mesure, lesdits récepteurs desdits moyens (30) de mesure du réseau étant répartis sur des lignes (L1-L4) et des colonnes (C1-C4) régulièrement espacées.

5. Dispositif selon l'une quelconques des revendications 1 à 4, **caractérisé en ce que** le substrat (35) est réalisé en graphite.

6. Procédé d'infusion de résine dans une préforme (12) fibreuse utilisant un dispositif selon la revendication 1, **caractérisé en ce qu'**il comporte les étapes consistant à :
- saturer progressivement la préforme (12) fibreuse par la résine liquide,
- émettre et recevoir un signal ultrasonore à travers la préforme (12) fibreuse,
- mesurer un temps de propagation (50) du signal ultrasonore pour parcourir un aller-retour dans la section (S1) de la préforme (12) fibreuse, et
- déterminer la réticulation de la pièce composite en fonction des variations du temps de propagation (50).

7. Procédé selon la revendication 6, **caractérise en ce qu'**il comporte les étapes consistant à :
- mesurer l'amplitude relative (51) du signal ultrasonore correspondant au rapport entre l'amplitude du signal ultrason envoyé et l'amplitude du signal ultrason reçu, et
- déterminer la réticulation de la pièce composite en fonction de l'amplitude relative (51).

8. Procédé selon la revendication 6 ou 7, **caractérisé en ce qu'**il comporte les étapes consistant à :
- estimer un taux de saturation de la préforme (12) fibreuse en fonction du temps de propagation (50) et/ou de l'amplitude relative (51) du signal reçu, et
- stopper la saturation de la préforme (12) fibreuse lorsque la préforme fibreuse à atteint un seuil de saturation prédéterminé.

9. Procédé selon l'une des revendications 6 à 8, **caractérisé en ce qu'**il comporte l'étape de détecter un séparateur de la préforme (12) fibreuse en fonction du temps de propagation (50) ou de l'amplitude relative (51) du signal reçu.

## Patentansprüche

1. Vorrichtung (10) zur Infusion von Harz in einen faserigen Vorformling (12), wobei die Vorrichtung (10) Folgendes umfasst:
- eine Form, die einen dichten Hohlraum (9) aufweist, der geeignet ist, den faserigen Vorformling (12) aufzunehmen, und einen Zufluss (19) für flüssiges Harz aufweist, und
- ein Ausbildungsblech (13), das in dem Hohlraum (9) in Kontakt mit dem faserigen Vorformling (12) angeordnet ist,
**dadurch gekennzeichnet, dass** die Vorrichtung (10) ein Mittel (30) zum Messen umfasst, das einen Sender und einen Empfänger aufweist, die geeignet sind, ein Ultraschallsignal durch einen Abschnitt (S1) des faserigen Vorformlings (12) zu senden und zu empfangen, wobei der Empfang des Signals durch das Ausbildungsblech (13) erfolgt, wobei der Empfänger des Mittels (30) zum Messen in einer Aussparung des Ausbildungsblechs (13) positioniert ist, und dadurch, dass das Ausbildungsblech (13) beheizbar ist und der Empfänger des Mittels (30) zum Messen ein piezoelektrisches Plättchen (36) aufweist, das auf einem Träger (35) befestigt ist, dessen Material geeignet ist, die Heiztemperatur des Ausbildungsblechs (13) zu vertragen.

2. Vorrichtung nach Anspruch 1, **dadurch gekennzeichnet, dass** das Mittel (30) zum Messen einen Sende-/Empfangssensor aufweist, der in der Aussparung des Ausbildungsblechs (13) positioniert ist.

3. Vorrichtung nach Anspruch 1, **dadurch gekennzeichnet, dass** das Mittel (30) zum Messen einen Sender (46) aufweist, der in einer Aussparung der Form (11) positioniert ist.

4. Vorrichtung nach einem der Ansprüche 1 bis 3, **dadurch gekennzeichnet, dass** die Vorrichtung (10) ein Netz aus Mitteln (30) zum Messen umfasst, wobei die Empfänger der Mittel (30) zum Messen des Netzes auf Zeilen (L1 bis L4) und Spalten (C1 - C4) verteilt sind, die gleichmäßig beabstandet sind.

5. Vorrichtung nach einem der Ansprüche 1 bis 4, **dadurch gekennzeichnet, dass** das Substrat (35) aus Graphit hergestellt ist.

6. Verfahren zur Infusion von Harz in einen faserigen Vorformling (12) mithilfe einer Vorrichtung nach Anspruch 1, **dadurch gekennzeichnet, dass** es die Schritte umfasst, die aus Folgendem bestehen:
- schrittweises Sättigen des faserigen Vorformlings (12) mit dem flüssigen Harz,
- Senden und Empfangen eines Ultraschallsignals durch den faserigen Vorformling (12),
- Messen einer Ausbreitungszeit (50) des Ultraschallsignals zum Zurücklegen eines Hin- und Rückwegs in dem Abschnitt (S1) des faserigen Vorformlings (12), und
- Feststellen der Vernetzung des Verbundteils in Abhängigkeit von den Abweichungen der Ausbreitungszeit (50) .

7. Verfahren nach Anspruch 6, **dadurch gekennzeichnet, dass** es die Schritte umfasst, die aus Folgendem bestehen:
- Messen der relativen Amplitude (51) des Ultraschallsignals, die dem Verhältnis zwischen der Amplitude des gesendeten Ultraschallsignals und der Amplitude des empfangenen Ultraschallsignals entspricht, und
- Feststellen der Vernetzung des Verbundteils in Abhängigkeit von der relativen Amplitude (51).

8. Verfahren nach Anspruch 6 oder 7, **dadurch gekennzeichnet, dass** es die Schritte umfasst, die aus Folgendem bestehen:
- Schätzen eines Sättigungsgrads des faserigen Vorformlings (12) in Abhängigkeit von der Ausbreitungszeit (50) und/oder der relativen Amplitude (51) des empfangenen Signals, und
- Anhalten des Sättigens des faserigen Vorformlings (12), wenn der faserige Vorformling eine vorbestimmte Sättigungsschwelle erreicht hat.

9. Verfahren nach einem der Ansprüche 6 bis 8, **dadurch gekennzeichnet, dass** es einen Schritt des Erkennens eines Trenners des faserigen Vorformlings (12) in Abhängigkeit von der Ausbreitungszeit (50) oder der relativen Amplitude (51) des empfangenen Signals umfasst.

## Claims

1. Device (10) for infusing resin into a fibrous preform (12), said device (10) comprising:
- a mold containing a sealed cavity (9) able to receive the fibrous preform (12) and containing an inlet (19) for liquid resin; and
- a caul plate (13) placed in the cavity (9), making contact with the fibrous preform (12),
**characterized in that** said device (10) comprises a measuring means (30) comprising an emitter and a receiver that are able to emit and receive an ultrasonic signal through a section (S1) of said fibrous preform (12), said signal being received through the caul plate (13), the receiver of the measuring means (30) being positioned in a void of the caul plate (13), and **in that** the caul plate (13) is heated and the receiver of the measuring means (30) comprises a piezoelectric chip (36) mounted on a substrate (35) the material of which is able to withstand the heating temperature of the caul plate (13) .

2. Device according to Claim 1, **characterized in that** the measuring means (30) comprises an emitter/receiver sensor positioned in the void in the caul plate (13).

3. Device according to Claim 1, **characterized in that** the measuring means (30) comprises an emitter (46) positioned in a void in the mold (11).

4. Device according to one of Claims 1 to 3, **characterized in that** said device (10) comprises an array of measuring means (30), said receivers of said measuring means (30) of the array being distributed in regularly spaced rows (L1-L4) and columns (C1-C4).

5. Device according to one of Claims 1 to 4, **characterized in that** the substrate (35) is made of graphite.

6. Method for infusing resin into a fibrous preform (12) using a device according to Claim 1, **characterized in that** it comprises steps consisting in:
- gradually saturating the fibrous preform (12) with the liquid resin;
- emitting and receiving an ultrasonic signal through the fibrous preform (12);
- measuring the time (50) taken for the ultrasonic signal to make a round trip in the section (S1) of the fibrous preform (12); and
- determining the degree of cure of the composite part depending on variations in this propagation time (50) .

7. Method according to Claim 6, **characterized in that** it comprises steps consisting in:
- measuring the relative amplitude (51) of the ultrasonic signal corresponding to the ratio of the amplitude of the emitted ultrasound signal to the amplitude of the received ultrasound signal; and
- determining the degree of cure of the composite part depending on the relative amplitude (51).

8. Method according to Claim 6 or 7, **characterized in that** it comprises steps consisting in:
- estimating a degree of saturation of the fibrous preform (12) depending on the propagation time (50) and/or the relative amplitude (51) of the received signal; and
- stopping the saturation of the fibrous preform (12) when the fibrous preform has reached a preset saturation threshold.

9. Method according to one of Claims 6 to 8, **characterized in that** it comprises the step of detecting a release film of the fibrous preform (12) depending on the propagation time (50) or the relative amplitude (51) of the received signal.
